# EUROPEAN PATENT SPECIFICATION

(11) **EP 4 342 202 B1**
(45) Date of publication and mention of the grant of the patent: **15.07.2026**
(21) Application number: 22725489.3
(22) Date of filing: 26.04.2022
(51) Int. Cl.: H04W 4/80, G06Q 20/00, H04W 12/06

(54) **METHOD FOR CONTROLLING AN APPARATUS**
VERFAHREN ZUR STEUERUNG EINER VORRICHTUNG
PROCÉDÉ DE COMMANDE D'UN APPAREIL

(30) Priority: 17.05.2021 EP 21305638
(43) Date of publication of application: 27.03.2024
(73) Proprietor: THALES DIS FRANCE SAS, 92190 Meudon (FR)
(72) Inventor: FAVREAU, Valentin, 92190 Meudon (FR); CHAFER, Sylvain, 92190 Meudon (FR); LELOUP, Laurent, 92190 Meudon (FR)
(74) Representative: Grevin, Emmanuel
(86) International application number: PCT/EP2022/061022
(87) International publication number: WO 2022/242991

(56) References cited:
- US-A1- 2021 004 786
- US-A1- 2021 110 378
- US-B1- 10 915 888

## Description

### (Field of the invention)

The present invention relates to methods for controlling an apparatus. It relates particularly to methods for controlling an apparatus which has limited user input interface or is devoid of user input interface.

### (Background of the invention)

An apparatus is a hardware device able to provide one or several services to a user. An apparatus may embed a user output interface like a display, a speaker or a LED (Light-Emitting Diode) for instance. For example, the apparatus may be (or include) a small card reader device intended to manage access to services provided by smart cards or to update settings of a smart card.

For cost reasons or to avoid complex hardware architecture, the apparatus may be devoid of user input interface. The apparatus may provide power to a coupled smart card. An individual may want to select a particular feature of the smart card coupled to the apparatus.

There is a need to allow a user to interact a card coupled with an apparatus which is devoid of user input interface.

The document US10915888-B1 discloses a method to synchronize the selection of proper keys on both a card and a host computer.

The document US2021/0004786-A1 discloses a method to utilize a payment protocol to authenticate a user for non-payment purposes.

### (Summary of the Invention)

The invention aims at solving the above mentioned technical problem.

The invention is set out in the appended set of claims.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows a first exemplary architecture of a system according to an example of the invention,
- Figure 2 shows a first exemplary flow diagram for controlling the behavior of an apparatus coupled to a smart card according to an example of the invention,
- Figure 3 shows a diagram of architecture of a system comprising an apparatus and a smart card according to an example of the invention; and
- Figure 4 shows a second exemplary flow diagram for controlling the behavior of an apparatus coupled to a smart card according to an example of the invention.

### (Detailed description of the preferred embodiments)

Smart cards are portable small devices comprising a memory, a microprocessor and an operating system for computing treatments. They may comprise services applications like payment applications. Smart cards may be considered as secure elements. They may comprise a plurality of memories of different types, like non-volatile memory and volatile memory. They are considered as tamper-resistant (or "secure") because they are able to control access to the data they contain and to authorize or not the use of their data by other machines. A smartcard may also provide computation services based on cryptographic engines. In general, smartcards have limited computing resources and limited memory resources and they are intended to connect a host machine which may provide them with electric power either in contact mode or contactless mode.

The invention may apply to any type of apparatus intended to be coupled to a smart card and able provide at least one service. At least on service offered by the apparatus is to provide the coupled smart card with electric power.

The invention may apply to any type of cards complying with ID-1, ID-2 or ID-3 format as defined by ISO/IEC7810:2019. For example the card may be a banking (or payment) smart card, a transport (or mass transit) card, an access badge, a loyalty card, a driving license or an identity document like a passport.

The invention is well-suited for apparatus which have very limited user input interface or are devoid of user input interface. The invention may apply to portable apparatus which may embed a low number of hardware components.

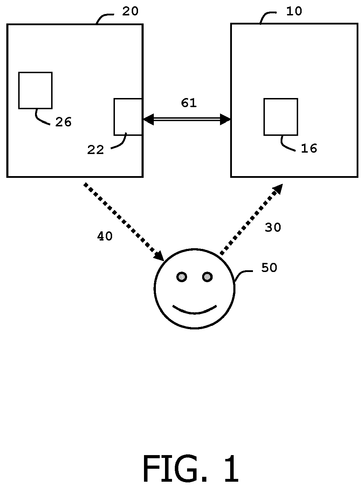

Figure 1 depicts a first exemplary architecture of a system according to an example of the invention.

In this example, the system comprises a smartcard 10 and a portable apparatus 20. The smart card 10 may be a payment card. The apparatus may be a device intended to power the card, to establish a communication session with the smart card and to send at least one command to the smart card.

The smart card 10 embeds a biometric sensor 16 which may be a fingerprint scanner. The biometric sensor 16 is adapted to track actions 30 of a user 50.

The apparatus embeds a card reader 22 able to establish a communication session 61 with the smart card 10 in contact or contactless mode. The apparatus may embed a user output interface 26 allowing to provide the user 50 (I.e. an individual) with information. For example, the user output interface may include a display, a loudspeaker, a vibration system, a haptic feedback system or an image projector. The apparatus may provide the user with a signal 40 through the user output interface 26.

The apparatus 20 and the card 10 may communicate using NFC (Near Field Communication) technology which is based on the exchanging of data via a modulated magnetic field. A NFC reader has an antenna which is able to modulate the magnetic field and to provide energy to NFC card. A contactless card and a contactless apparatus (comprising a NFC reader) may communicate thanks to an inductive coupling in a field frequency equal to 13.56 MHz. In particular, the ISO14443, ISO/IEC21481 and ISO18092 standards provide modulation technologies and communication protocols which may be used in NFC domain. The apparatus and the smartcard may also be coupled using the Very High Data Rate (VHDR) protocol as defined by the TF2N653 document.

The apparatus 20 and the card 10 may communicate using ISO/IEC-7816 protocols (like T=0 or T=1 for instance), through the SWP (Single Wire Protocol) or any relevant protocol in contact mode.

Preferably, the apparatus 20 may be a small card reader. In some embodiments, the apparatus 20 may be a wearable device like a watch, a key fob or a bracelet.

Thanks to an embodiment of the invention, a user 50 can control the behavior of both the apparatus and the smart card by acting on the biometric sensor of the card and getting feedback information through the user output interface of the apparatus.

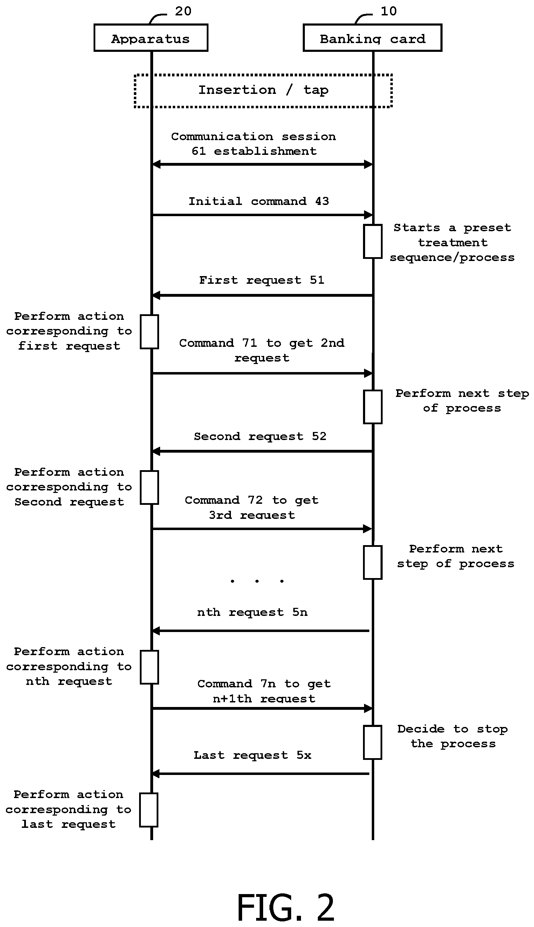

Figure 2 depicts a first exemplary flow diagram for controlling the behavior of an apparatus coupled to a card according to an example of the invention.

In this example, the smart card 10 is a payment card embedding a fingerprint sensor.

The apparatus 20 may embed an internal battery or may be connected to an external energy source. The apparatus 20 may include a card interface able to communicate using NFC technology.

The apparatus 20 may be designed to send to the smart card an initial command 43 which aims at triggering execution of a specific application into the smart card. For example, the apparatus 20 may be designed to send a Select command to select the specific application embedded into the smart card.

The apparatus 20 may be designed to send the initial command as soon as the communication session 61 has been established.

The specific application is designed to control the behavior of the apparatus and to supervise all further actions executed by the apparatus during the communication session.

The smartcard 10 may comprise a contactless communication interface designed to exchange data with the apparatus 20.

The smartcard 10 comprises a specific application (also named controlling application) which may be a software application like an Applet.

The smartcard 10 may be designed to provide the many features like for example: allowing enrollment of biometric reference of a user in the smart card, removing a registered user's biometric reference from the smart card or verification by the card that captured biometric entry match the stored biometric reference, consultation of the balance of a purse account, consultation of the number of loyalty points, consultation of a history of the last transactions carried out with the smart card or consultation of a history of the places of the last uses of the smartcard.

During a first step, a communication session 61 is established between the smart card 10 and the apparatus 20. Establishment of the communication session 61 may start in response to a tap which occurs when the smart card is placed within a proximity to the card reader unit of the apparatus 20 or when the card is inserted into apparatus 20.

Then the apparatus may send an initial command 43 to the smart card in order to select a preset application into the card 10. Such a Select command 43 may be useful when the card is designed to execute several functions for instance. For instance, the command 43 may select the controlling application which is designed to interact with the apparatus according to the invention.

Then the smart card 10 starts a preset treatment (or process) in response to the selection of the specific application. For instance, the smart card may check whether a complete biometric reference template has been stored in the card memory. If no complete biometric reference template has been registered in the card 10, the specific application may send a first request 51 to the apparatus in response to the initial command 43. For example the first request 51 may be encapsulated in the response of the initial command 43. For instance, the first request 51 may be conveyed in the payload of the response to the initial command.

Then the apparatus 20 may perform an action defined by the first request 51. For instance, the apparatus may display a message referenced by (or contained in) the first request.

Then the apparatus 20 may send a command 71 (also named Get Next Request Command) to the smart card through the communication session 61 in order to get a second request. Optionally, the command 71 may contain a response to the first request 51 which may be encapsulated in the payload of the command 71.

Then the smart card 10 may perform the next step of the current treatment/process in response to the receipt of the Get Request command 71. For instance, the card may activate capture of an action of a user 50 on the biometric sensor.

Then the specific application may send a second request 52 to the apparatus once the treatment step has been performed on card side. For example the second request 52 may be encapsulated in a response sent to the command 71.

Then the apparatus 20 may perform an action specified by the second request 52. For instance, the apparatus may activate a LED.

Then the apparatus 20 may send a further Get Request command 72 to the smart card through the communication session 61 to get a third request from the card. The response to the second request 52 may be conveyed in the payload of the command 72. In a preferred embodiment, if the previous Request was successfully executed by the apparatus, the subsequent Get Request command does not comprise a response to the previous Request since the fact that the apparatus sends a further Get Request command may mean that previous Request was successfully executed by the apparatus.

Several additional exchanges between the card 10 and the apparatus 20 may be carried out as depicted by the nth request 5n and the subsequent command 7n to get the n+1th request at Figure 2.

The exchanges between the card 10 and the apparatus may continue until the smart card 10 decides to stop the treatment/process.

For instance, the treatment selected by the specific application may be to verify that the biometric reference previously stored in the card is correct. The corresponding treatment may contain several steps to capture a new biometric data from the cardholder and to check that the captured biometric data matches the biometric reference previously stored in the card. Such a process may need several attempts to capture the biometric data of the user until an ending condition happens.

Thanks to the treatment/process, the smart card may make the decision to end the current treatment if the number of erroneous match verifications reach a preset threshold or if a successful match occurs.

The smart card 10 may send a last request 5x to the apparatus to inform the apparatus that the treatment is over. On receipt of the last request 5x, the apparatus may perform an action associated to the last request. For instance, the apparatus may light a green LED or display a message/design/pattern on the screen to warn the user 50 that the treatment is successful.

Alternatively, the card may stay mute (I.e. do not send any message to the apparatus) so that the apparatus may conclude that the treatment is over. The apparatus may be configured to automatically enter in sleep mode as soon as it is informed by the smart card that the process is finished.

Thanks to some embodiments of the invention, once the smart card received the initial command, the smart cards fully controls the behavior of the apparatus by sending a series of requests which specify actions to be performed by the apparatus.

According to some embodiments of the invention, the user provides input to the card only and is provided with instructions or information through the user output interface of the apparatus so that the user is aware of what they are supposed to do.

Thanks to some embodiments of the invention, a user may parse through the menu controlled by the card and presented by the apparatus and may select the relevant service that suits their needs through the user input interface of the smart card.

The series of request/Get next Request command exchanges and associated actions could remain under the supervision of the specific (controlling) application embedded in the smart card.

For instance several pairs (card request / apparatus Get next Request command) may be exchanged in order to navigate in the menu fully managed and controlled by the smart card. Via the capture of non-biometric data by the biometric sensor of the card, the user may change the current menu item, validate an action, abort an action or scroll to display more information on the screen of the apparatus. It is to be noted that such a scrolling capacity allow to implement a display having a small size in the apparatus and thus to reduce cost of the hardware components embedded in the apparatus.

ISO/IEC7816 standards specify a master/slave model in which the card reader is the master and the smart card is the slave. According to some embodiments of the invention, although the messages exchanged comply with ISO/IEC7816 model, the apparatus acts as a slave which strictly obeys the instructions (orders) provided by the smart card 10 that acts as the master, once the initial command 43 has been sent by the apparatus. In other words, once it has sent the initial command 43, the apparatus takes no initiative on its own and only acts according to the requests sent by the coupled smart card.

Unlike the usual operating model, the smart card may make all decisions required to perform a complete treatment (including several steps) that requires the active participation of the apparatus 20.

According to some embodiments of the invention, the requests generated by the card are conveyed in a response (which complies with the format specified by ISO/IEC7816 standard) to a command previously received by the card. Reciprocally, a response (generated by the apparatus) to the request of the card may be conveyed in a Get Next Request command which complies with the format specified by ISO/IEC7816 standards.

The card 10 may embed a user input interface which may be a button, a motion sensor or a vibration sensor.

The card 10 may embed a user input interface which may be biometric sensor configured to track/capture actions of the cardholder. The biometric sensor may be configured to capture at least one non-biometric data corresponding to an action of the user.

In the present description, a non-biometric data is a data which is not intrinsic to the nature of the user's body. In other words, a non-biometric data is independent of the permanent characteristics of a specific user. Thus two different users may enter the same non-biometric data on the biometric sensor.

A non-biometric data captured by the biometric sensor may reflect detection of a predefined movement on the biometric sensor, the duration of an interaction between the user and the biometric sensor, activation of a specific part of the biometric sensor by the user or the number or frequency of an interaction between the user and the biometric sensor.

A non-biometric data captured by the biometric sensor may reflect the speed of a movement of the user.

When the biometric sensor is a fingerprint capacitive sensor, the captured non-biometric data may be a specific gesture (i.e. movement) like sliding left, sliding right, sliding up or sliding down with a finger on the sensor.

The captured non-biometric data may be a short tap or a long tap (i.e. contact) on the surface of the fingerprint sensor.

The captured non-biometric data may the combination of several taps whose duration or spacing may be particular.

The captured non-biometric data may be the contact of a specific part of the sensor. For instance, assuming that a fingerprint sensor is large enough, four areas can be defined: Top left, top right, bottom left and bottom right. Thus the captured non-biometric data may a combination like "short contact with bottom left area" then "long contact with top right area".

Depending on the size of the surface of the sensor and of the applicative needs, other number of areas may be defined. For instance, two areas (left/right) or six areas (top left, top right, middle left, middle right, bottom left and bottom right) may be defined.

In some embodiments, the captured non-biometric data may be the combination of two contacts using two fingers on either two areas of a biometric sensor or on two biometric sensors.

The surface of some fingerprint sensors may be used as a capacitive touch pad. Fingerprint sensors using capacitive technology can be used as capacitive track pad. A fingerprint capacitive sensor can be seen as a very high-resolution capacitive track pad. The surface of the Biometric sensor may be divided into several zones (e.g. 6 or 9 zones for instance) and the sensor may be able to detect the presence/contact/interaction of a finger in each zone.

In some embodiments, the communication session 61 may be secured based on keys stored in the smart card and the apparatus. For instance, messages exchanged through the communication session 61 may be enciphered using cryptographic algorithms well known in the domain of smart cards. The exchanged data may be enciphered and/or signed with a symmetric algorithm or using a public/private key pair.

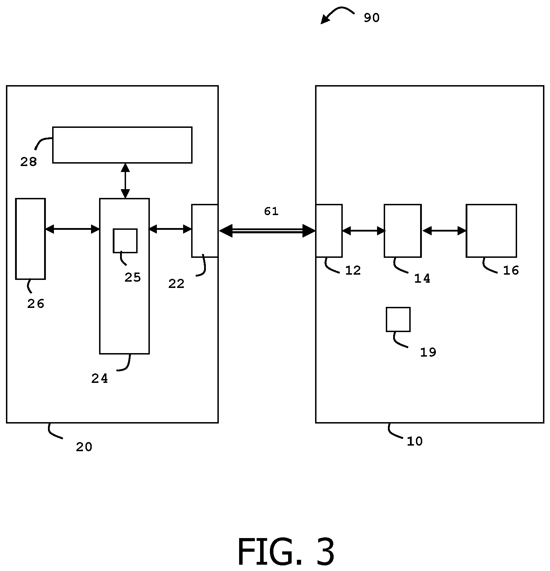

Figure 3 depicts a diagram of architecture of a system 90 comprising an apparatus 20 and a smart card according to an example of the invention.

In this example, the smart card 10 is an access badge allocated to a user and containing credentials allowing to get access to an area having a specific security level.

The smart card 10 comprises a secure chip 14 (also called secure element), a biometric sensor 16 and a physical communication interface 12 designed to communicate with the apparatus 20 in contact or contactless mode. The secure chip 14 is connected to both the biometric sensor 16 and the physical communication interface 12.

In some embodiments, the smart card 10 may comprise a sensor controller connected to both the biometric sensor 16 and the secure chip 14.

The smart card 10 may store a key 19 intended to be used to secure the data exchanged with the apparatus 20. The key 19 may be stored in a non-volatile memory embedded in the card 10.

The secure element 14 may be a conventional smart card chip with additional features. The secure element 14 may comprise a processor and a set of software and/or hardware instructions which are executed by the processor to perform the functions of the secure element. The secure element 14 may comprise the specific application (also named controlling application) which is designed to control the behavior of the coupled apparatus.

The specific application may be configured to identify an appropriate process and starts the selected process/treatment on receipt of initial command 43 coming from the apparatus. In some embodiments, the specific application may request the apparatus to display a menu comprising all functions that the card may provide to the cardholder.

The specific application may be configured to retrieve a non-biometric data captured by the biometric sensor 16 (or by any other user input interface embedded in the card like a keyboard or a button for instance) and to generate a request targeting the apparatus according to the value of the captured non-biometric data.

In some embodiments, the smart card 10 may be designed to behave as a conventional card as long as it has not received the initial command 43. In other words, if the apparatus does not trigger the specific application through a data sent to the card, the apparatus and the card may continue to continue to function in the conventional way as if they do not implement the invention.

The apparatus 20 may be a wearable device comprising a card controller unit 24 including a chip and software instructions. The apparatus 20 may comprise a non-volatile memory 28, a physical user output interface 26 and a physical communication interface 22 configured to exchange data with the smart card 10. The apparatus may be or include a card reader.

The physical user output interface 26 may include a display, a speaker, one or several LEDs and/or a haptic feedback device.

The apparatus 20 may store a key 25 in the card controller unit 24 or in the non-volatile memory 28 and may be adapted to decipher (and/or to check a signature of) the data received from the smart card 10 using the key 25.

In some embodiments, the apparatus 20 is said to be paired to the smart card 10 when it stores a secret value or a key allowing to securely access the content of the encipher/signed data sent by the smart card.

The apparatus 20 is able to establish a communication session 61 with the smart card through its physical communication interface 22.

The apparatus 20 may be configured to provide power to the coupled card and to perform a plurality of actions that can be activated by the coupled smart card. For example the smart card may trigger an action consisting to be the providing of the user with a signal (or a message) through the user output interface 26 of the apparatus. For example the smart card may trigger an action consisting to the selection or activation of an operating mode, a software application or a hardware component into the apparatus. For example the smart card may trigger an action consisting to change the current internal state of the apparatus. For example the smart card may trigger an action consisting to turn on a light, emitting an acoustic signal or a vibratory signal by the apparatus.

An action may also be a combination of the above listed feature.

Some actions may require the apparatus to send a response to the received card request in order to allow the smart card to continue to supervise (control) the progress of all the different stages of the current treatment.

The apparatus 20 is configured to send an initial command to the smart card when (preferably as soon as) the communication session 61 has been established. Once it has sent the initial command, the apparatus 20 is configured to take no initiative on its own and only perform actions specified by the requests received from the coupled smart card.

In some embodiments, the apparatus may be configured to send a parameterization command to the smart card before sending the initial command. Such a parameterization command may reflect the capacity of the apparatus 20. For instance, the card may analyze the content of the parameterization command and may be warned that the apparatus has a given firmware version, a particular user output interface or has been customized with a list of languages. Thus the smart card may adapt its internal treatment according to the capacity /available features of the apparatus 20.

The parameterization command may specify the profile of the apparatus. For example, the parameterization command may contain one or more of the following parameters: Presence of a screen embedded in the apparatus, number of lines of the screen, Number of characters per line, support of some specific font (e.g. Underlined characters), availability of horizontal scrolling of text, vertical scrolling of text, Support of a Graphical Progress Bar, Maximum size of the graphical Progress Bar, support of BLE interface, presence of a keypad, language set by default, default Power Off Countdown duration (expressed in seconds) and presence of pre-stored messages.

In some embodiment, the apparatus may sent a parameterization command conveying an identifier or a version of its own hardware configuration and/or of its own firmware configuration. If the smart card is unable to adapt its own behavior based on the received identifier/version, the card may request the apparatus to send a second parameterization command to get the detailed profile of the apparatus.

In some embodiments, the apparatus may be configured to automatically stop the communication session when it receives a last request 5x from the coupled card or when the card stays mute (I.e. do not send any data to the apparatus) during a predefined duration.

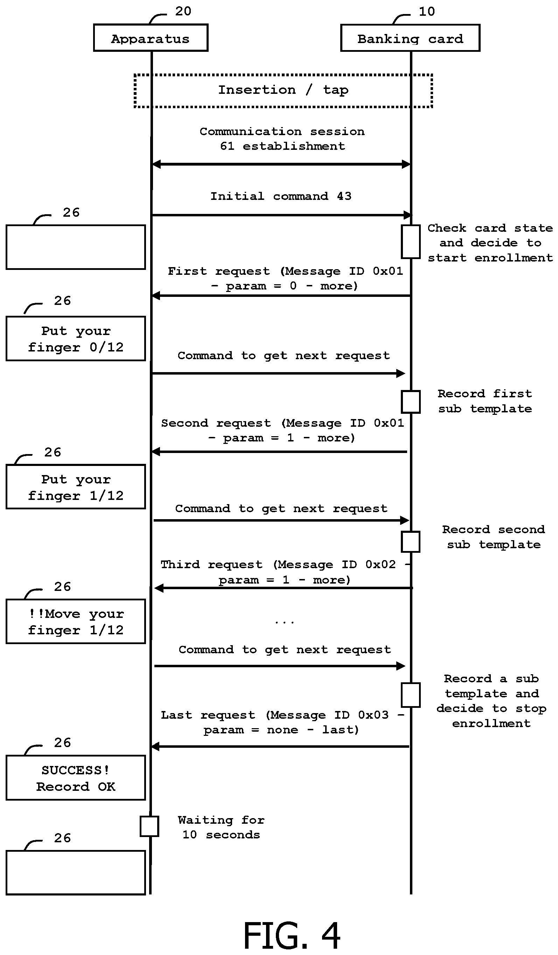

Figure 4 depicts a second exemplary flow diagram for controlling the behavior of an apparatus coupled to a smart card according to an example of the invention.

In this example, the smart card 10 is a payment card embedding a user input interface 16 which is a fingerprint sensor.

During a first step, a communication session 61 is established between the smart card 10 and the apparatus 20 in a way similar to the one described at Figure 2. At this stage the screen 26 of the apparatus may be empty.

The apparatus 20 may be designed to send a Select command (initial command 43) to select the specific application embedded in the smart card as soon as the communication session 61 has been established.

Upon receipt of the initial command, the specific application may check the internal state of the card. If the specific application detects that no user biometric reference is stored in the smart card, the specific application may be designed to automatically select the enrollment of a new biometric reference of a user.

Then the specific application may send a first request to the apparatus in response to the initial command in order to request the display of a first message by the apparatus. For example the first request may contain the identifier (ex: "Message ID 0x01") of the message that should be displayed on the screen of the apparatus. The first request may also contain a parameter (ex: "param = 0") to be applied to the displayed message. The first request may also contain an indicator (ex: "more") which shows that the card waits for a new Get Next request command in order to continue further steps of the current treatment.

Then the apparatus 20 may perform the action defined by the first request: it displays the message specified by the received request. The displayed message is a combination of a pre-recorded text "Put your finger ?/12" in which the question mark is replaced by inserting the received parameter value "0". At this stage the screen of the apparatus may show "Put your finger 0/12".

In this example, the apparatus is supposed to have been previously personalized by storing a set of pre-recorded texts and their corresponding identifiers (Message ID). Such a list of pre-recorded texts may be stored in a table, file or any relevant container located in the non-volatile memory of the apparatus.

Then the apparatus 20 may send a Get Next Request command to the smart card through the communication session 61. On receipt of the Get Next Request command, the specific application may start the capture of a biometric data on its sensor 16. Once a first biometric data has been captured and treated by the card, the specific application may send a second request to request the display of a second message. For example the second request may contain the identifier (ex: "Message ID 0x01") of the message that should be displayed on the screen of the apparatus. The second request may also contain a parameter (ex: "param = 1") to be applied to the message. The second request may also contain an indicator (ex: "more") which reflects that the card waits for a further Get Next Request command in order to continue further steps of the current treatment.

Then the apparatus 20 may perform the action defined in the second request by displaying the message specified by the received request. At this stage the screen of the apparatus may show "Put your finger 1/12".

Then the apparatus 20 may send a Get Next Request command to the smart card. On receipt of the Get Next Request command, the specific application may start the capture of a second biometric data on its sensor 16.

If no biometric data has been captured by the sensor 16 after a preset duration, the specific application may send a third request to request the display of a second message intended to remind the cardholder that they need to present their finger to the fingerprint sensor of the card. For example the third request may contain the identifier (ex: "Message ID 0x02") of the message. The third request may also contain a parameter (ex: "param = 1") to be applied to the message. The third request may also contain an indicator (ex: "more") which reflects that the card waits for a further Get Next Request command in order to continue further steps of the current treatment.

Then the apparatus 20 may perform the action defined in the third request by displaying the message specified by the received request. At this stage the screen of the apparatus may show "!!Move your finger 1/12". This allows the system to ask the user to move their finger slightly in order to capture samples covering as large an area as possible.

Then the apparatus 20 may send a Get Next Request command to the smart card. On receipt of the Get Next Request command, the specific application may retrieve the biometric data captured by the sensor 16.

If the data captured since the start of processing is sufficient to constitute an acceptable biometric reference value, then the specific application may record the newly created user biometric template and send a last request to request the display of a last message. For example the last request may contain the identifier (ex: "Message ID 0x03") of the message. The last request may also contain an indicator (ex: "last") which reflects that the card has ended the treatment.

Then the apparatus 20 may perform the action defined in the last request by displaying the message specified by the received request. At this stage the screen of the apparatus may show "SUCCESS! Record OK".

Then the apparatus 20 may turn off its screen after a predefined duration (ex: 5 or 10 seconds).

In some embodiments, the requests sent by the card may contain the text of the message to display instead of a reference of the message.

In some embodiments, the card may be devoid of user input interface and the treatment carried out by the smart card may comprise one or more requests sent to the coupled apparatus without user input. For instance, a banking card may automatically force the apparatus to display the amount of the last three payment transactions and the expiry date of the banking card.

The invention is not limited to the described embodiments or examples. In particular, the described examples and embodiments may be combined.

The invention is not limited to Banking smart cards and may apply to any smart cards comprising at least one user input interface like a button, a keyboard or biometric sensor.

Although examples of the invention have been mainly provided in the banking domain, the invention also applies to other domains. For example, the smart card may provide access to a virtual area, a physical area like a building or a transport network.

Thanks to some embodiments of the invention, a cheap and basic apparatus having mainly a display and card reader feature may be used to perform enrollment of biometric reference on a large range of smart cards. By controlling all the steps of the enrollment process, the card may guide the user to perform the needed operations: put a finger on the biometric sensor of the card, remove the finger from the biometric sensor, retry if needed and inform the user of the result. The set of commands supported by the card reader of the apparatus may be reduced to a minimum. The apparatus may be implemented with a limited logic since it does not take any decision and just apply the instructions given by the card.

## Claims

1. A method for controlling an apparatus (20) configured to perform a plurality of actions, the method comprising:
- establishing a communication session (61) between the apparatus and a card (10) complying with ID-1, ID-2 or ID-3 format as defined by ISO/IEC7810:2019,
- sending an initial command (43) from the apparatus to the card, the apparatus being separated from the card and comprising a card reader (22) able to establish the communication session with the card,
**characterized in that** the method comprises:
- upon receipt of the initial command, the card starts executing a treatment comprising a plurality of steps,
- once the card has received the initial command and until the communication session ends, the card fully controls the behavior of the apparatus by sending a series of requests, each of said requests specifying which of the plurality of actions are to be executed by the apparatus, each request in said series being interpreted by the apparatus to identify a corresponding action from the plurality of actions; sending of each request of said series being carried out after execution of a step of the treatment by the card.

2. The method according to claim 1, wherein the apparatus performs an execution of said corresponding action then sends to the card a data containing a response to the request requesting said execution.

3. The method according to claim 1, wherein the card embeds a user input interface (16) and wherein at least one request of said series is generated depending on a value captured through the user input interface.

4. The method according to claim 1, wherein the apparatus embeds a user output interface (26) and wherein at least one action from the plurality of actions is a providing of an information identified by the request corresponding to the at least one action through the user output interface.

5. The method according to claim 1, wherein the apparatus sends a Get Next Request command to each request of said series and wherein the card waits for receipt of the Get Next Request command before sending the next request.

6. The method according to claim 1, wherein the apparatus enters in sleep mode or stops the communication session in response to receipt of a request of said series which specifies that no more request will be sent by the card through the communication session.

7. The method according to claim 1, wherein one action from the plurality of actions is either to display a message on a screen embedded in the apparatus, or to turn on a light in the apparatus, or to activate a contactless communication interface in the apparatus.

8. The method according to claim 1, wherein the card controls a partial or complete phase of biometric reference enrollment.

9. The method according to claim 1, wherein the card controls a phase of checking of a biometric reference pre-registered in the card.

10. An apparatus (20) comprising a card reader (22) and configured to perform a plurality of actions, to establish, through said card reader a communication session (61) with a card (10) complying with ID-1, ID-2 or ID-3 format as defined by ISO/IEC7810:2019 and to send an initial command (43) to the card, the apparatus being separated from the card,
**characterized in that** the apparatus is adapted to be fully controlled by the card once the apparatus sent the initial command and until the communication session ends,
**in that** the initial command is designed to make the card start executing a treatment comprising a plurality of steps,
and **in that** on receipt of a series of requests specifying which of the plurality of actions are to be executed by the apparatus, said series being sent by the card, the apparatus is configured to interpret each request of said series in order to identify a corresponding action from the plurality of actions and to execute said corresponding action.

11. The apparatus according to claim 10, wherein the apparatus is devoid of user input interface.

12. The apparatus according to claim 10, wherein one action from the plurality of actions is either to display a message on a screen embedded in the apparatus, or to turn on a light in the apparatus, or to activate a contactless communication interface in the apparatus.

13. A card (10) complying with ID-1, ID-2 or ID-3 format as defined by ISO/IEC7810 : 2019, configured to communicate, via a communication session (61), with an apparatus (20) which comprises a card reader (22) able to establish the communication session and is configured to perform a plurality of actions, said card being configured to receive an initial command (43) from the apparatus, the apparatus being separated from the card, **characterized in that** upon receipt of the initial command, the card is configured to start executing a treatment comprising a plurality of steps, **in that** once the card received the initial command and until the communication session ends, the card is configured to fully control the behavior of the apparatus by sending a series of requests, each of said requests specifying which of the plurality of actions are to be executed by the apparatus, each request of said series being associated to a corresponding action from the plurality of actions, and **in that** the card is configured to send each request of said series after execution of a step of the treatment.

14. The card according to claim 13, wherein the card embeds a user input interface (16) and wherein at least one request of said series is generated depending on a value captured through the user input interface.

15. A system (90) comprising an apparatus according to claim 10 and a card according to claim 13.

## Patentansprüche

1. Verfahren zum Steuern einer Vorrichtung (20), die konfiguriert ist, um eine Vielzahl von Aktionen durchzuführen, das Verfahren umfassend:
- Herstellen einer Kommunikationssitzung (61) zwischen der Vorrichtung und einer Karte (10), die dem ID-1-, ID-2- oder ID-3-Format, wie durch ISO/IEC7810:2019 definiert, entspricht,
- Senden eines Initialbefehls (43) von der Vorrichtung an die Karte, wobei die Vorrichtung von der Karte getrennt ist und einen Kartenleser (22) umfasst, der in der Lage ist, die Kommunikationssitzung mit der Karte aufzubauen,
**dadurch gekennzeichnet, dass** das Verfahren umfasst:
- bei Empfang des Initialbefehls beginnt die Karte mit der Ausführung einer Behandlung, umfassend eine Vielzahl von Schritten,
- sobald die Karte den Initialbefehl empfangen hat und bis die Kommunikationssitzung endet, steuert die Karte das Verhalten der Vorrichtung vollständig durch Senden einer Reihe von Anforderungen, wobei jede der Anforderungen spezifiziert, welche der Vielzahl von Aktionen durch die Vorrichtung auszuführen sind, wobei jede Anforderung in der Reihe durch die Vorrichtung interpretiert wird, um eine entsprechende Aktion aus der Vielzahl von Aktionen zu identifizieren; wobei das Senden jeder Anforderung der Reihe nach Ausführung eines Schritts der Behandlung durch die Karte durchgeführt wird.

2. Verfahren nach Anspruch 1, wobei die Vorrichtung die Ausführung der Aktion durchführt und anschließend an die Karte Daten sendet, die eine Antwort auf die Anforderung zur Durchführung dieser Ausführung enthalten.

3. Verfahren nach Anspruch 1, wobei die Karte eine Benutzereingabeschnittstelle (16) enthält und wobei mindestens eine Anforderung der Reihe in Abhängigkeit von einem über die Benutzereingabeschnittstelle erfassten Wert erzeugt wird.

4. Verfahren nach Anspruch 1, wobei die Vorrichtung eine Benutzerausgabeschnittstelle (26) enthält und wobei mindestens eine der Vielzahl von Aktionen darin besteht, über die Benutzerausgabeschnittstelle eine Information bereitzustellen, die durch die der mindestens einen Aktion entsprechende Anforderung identifiziert wird.

5. Verfahren nach Anspruch 1, wobei die Vorrichtung einen Get-Next-Request-Befehl an jede Anforderung der Reihe sendet und wobei die Karte auf den Empfang des Get-Next-Request-Befehls wartet, bevor sie die nächste Anforderung sendet.

6. Verfahren nach Anspruch 1, wobei die Vorrichtung in den Ruhemodus eintritt oder die Kommunikationssitzung als Reaktion auf den Empfang einer Anforderung der Reihe beendet, die spezifiziert, dass keine weitere Anforderung durch die Karte über die Kommunikationssitzung gesendet wird.

7. Verfahren nach Anspruch 1, wobei eine Aktion aus der Vielzahl von Aktionen entweder darin besteht, eine Nachricht auf einem in der Vorrichtung integrierten Bildschirm anzuzeigen, oder ein Licht in der Vorrichtung einzuschalten, oder eine kontaktlose Kommunikationsschnittstelle in der Vorrichtung zu aktivieren.

8. Verfahren nach Anspruch 1, wobei die Karte eine teilweise oder vollständige Phase der biometrischen Referenzerfassung steuert.

9. Verfahren nach Anspruch 1, wobei die Karte eine Phase der Überprüfung einer in der Karte vorregistrierten biometrischen Referenz steuert.

10. Vorrichtung (20), die einen Kartenleser (22) umfasst und konfiguriert ist, um eine Vielzahl von Aktionen durchzuführen, um über den Kartenleser eine Kommunikationssitzung (61) mit einer Karte (10) aufzubauen, die dem ID-1-, ID-2- oder ID-3-Format, wie durch ISO/IEC7810:2019 definiert, entspricht, und einen Initialbefehl (43) an die Karte zu senden, wobei die Vorrichtung von der Karte getrennt ist,
**dadurch gekennzeichnet, dass** die Vorrichtung dazu eingerichtet ist, vollständig durch die Karte gesteuert zu werden, sobald die Vorrichtung den Initialbefehl gesendet hat und bis die Kommunikationssitzung endet,
dadurch, dass der Initialbefehl dazu ausgelegt ist, die Karte zu veranlassen, mit der Ausführung einer Behandlung zu beginnen, die eine Vielzahl von Schritten umfasst,
und dadurch, dass bei Empfang einer Reihe von Anforderungen, die spezifizieren, welche der Vielzahl von Aktionen durch die Vorrichtung auszuführen sind, wobei die Reihe von der Karte gesendet wird, die Vorrichtung konfiguriert ist, um jede Anforderung der Reihe zu interpretieren, um eine entsprechende Aktion aus der Vielzahl von Aktionen zu identifizieren und die entsprechende Aktion auszuführen.

11. Vorrichtung nach Anspruch 10, wobei die Vorrichtung keine Benutzereingabeschnittstelle aufweist.

12. Vorrichtung nach Anspruch 10, wobei eine Aktion aus der Vielzahl von Aktionen entweder darin besteht, eine Nachricht auf einem in der Vorrichtung integrierten Bildschirm anzuzeigen, oder ein Licht in der Vorrichtung einzuschalten, oder eine kontaktlose Kommunikationsschnittstelle in der Vorrichtung zu aktivieren.

13. Karte (10), die dem Format ID-1, ID-2 oder ID-3, wie in ISO/IEC7810:2019 definiert, entspricht, die konfiguriert ist, um über eine Kommunikationssitzung (61) mit einer Vorrichtung (20) zu kommunizieren, die einen Kartenleser (22) umfasst, der in der Lage ist, die Kommunikationssitzung aufzubauen, und konfiguriert ist, um eine Vielzahl von Aktionen durchzuführen, wobei die Karte konfiguriert ist, um einen Initialbefehl (43) von der Vorrichtung zu empfangen, wobei die Vorrichtung von der Karte getrennt ist,
**dadurch gekennzeichnet, dass** die Karte bei Empfang des Initialbefehls konfiguriert ist, um mit der Ausführung einer Behandlung zu beginnen, die eine Vielzahl von Schritten umfasst, dass die Karte, sobald sie den Initialbefehl empfangen hat und bis die Kommunikationssitzung endet, dazu konfiguriert ist, das Verhalten der Vorrichtung durch Senden einer Reihe von Anforderungen vollständig zu steuern, wobei jede der Anforderungen spezifiziert, welche der Vielzahl von Aktionen durch die Vorrichtung auszuführen sind, wobei jede Anforderung der Reihe einer entsprechenden Aktion aus der Vielzahl von Aktionen zugeordnet ist, und dass die Karte konfiguriert ist, um jede Anforderung der Reihe nach Ausführung eines Schritts der Behandlung zu senden.

14. Karte nach Anspruch 13, wobei die Karte eine Benutzereingabeschnittstelle (16) enthält und wobei mindestens eine Anforderung der Reihe in Abhängigkeit von einem über die Benutzereingabeschnittstelle erfassten Wert erzeugt wird.

15. System (90), umfassend eine Vorrichtung nach Anspruch 10 und eine Karte nach Anspruch 13.

## Revendications

1. Procédé permettant de commander un appareil (20) configuré pour mettre en œuvre une pluralité d'actions, le procédé comprenant :
- l'établissement d'une session de communication (61) entre l'appareil et une carte (10) répondant au format ID-1, ID-2 ou ID-3 tel que défini par ISO/IEC7810:2019,
- l'envoi d'une instruction initiale (43) de l'appareil à la carte, l'appareil étant séparé de la carte et comprenant un lecteur de carte (22) apte à établir la session de communication avec la carte,
**caractérisé en ce que** le procédé comprend :
- à la réception de l'instruction initiale, la carte démarre l'exécution d'un traitement comprenant une pluralité d'étapes,
- une fois que la carte a reçu l'instruction initiale et jusqu'à ce que la session de communication se termine, la carte commande complètement le comportement de l'appareil en envoyant une série de demandes, chacune desdites demandes spécifiant celles parmi la pluralité d'actions qui doivent être exécutées par l'appareil, chaque demande dans ladite série étant interprétée par l'appareil pour identifier une action correspondante parmi la pluralité d'actions ; l'envoi de chaque demande de ladite série étant effectué après exécution d'une étape du traitement par la carte.

2. Procédé selon la revendication 1, dans lequel l'appareil met en œuvre une exécution de ladite action correspondante puis envoie à la carte des données contenant une réponse à la demande demandant ladite exécution.

3. Procédé selon la revendication 1, dans lequel la carte incorpore une interface d'entrée utilisateur (16) et dans lequel au moins une demande de ladite série est générée en dépendance d'une valeur capturée par le biais de l'interface d'entrée utilisateur.

4. Procédé selon la revendication 1, dans lequel l'appareil incorpore une interface de sortie utilisateur (26) et dans lequel au moins une action parmi la pluralité d'actions est une fourniture d'informations identifiées par la demande correspondant à l'au moins une action par le biais de l'interface de sortie utilisateur.

5. Procédé selon la revendication 1, dans lequel l'appareil envoie une instruction Get Next Request à chaque demande de ladite série et dans lequel la carte attend la réception de l'instruction Get Next Request avant l'envoi de la demande suivante.

6. Procédé selon la revendication 1, dans lequel l'appareil entre dans le mode veille ou arrête la session de communication en réponse à la réception d'une demande de ladite série qui spécifie qu'aucune demande supplémentaire ne sera envoyée par la carte au cours de la session de communication.

7. Procédé selon la revendication 1, dans lequel une action parmi la pluralité d'actions est soit pour afficher un message sur un écran incorporé dans l'appareil, soit pour allumer un voyant dans l'appareil, soit pour activer une interface de communication sans contact dans l'appareil.

8. Procédé selon la revendication 1, dans lequel la carte commande une phase partielle ou complète d'une inscription de référence biométrique.

9. Procédé selon la revendication 1, dans lequel la carte commande une phase de vérification d'une référence biométrique préenregistrée dans la carte.

10. Appareil (20) comprenant un lecteur de carte (22) et configuré pour mettre en œuvre une pluralité d'actions, pour établir, par le biais dudit lecteur de carte une session de communication (61) avec une carte (10) répondant au format ID-1, ID-2 ou ID-3 tel que défini par ISO/IEC7810:2019 et pour envoyer une instruction initiale (43) à la carte, l'appareil étant séparé de la carte,
**caractérisé en ce que** l'appareil est adapté pour être complètement commandé par la carte une fois que l'appareil a envoyé l'instruction initiale et jusqu'à ce que la session de communication se termine,
**en ce que** l'instruction initiale est conçue pour amener la carte à démarrer l'exécution d'un traitement comprenant une pluralité d'étapes,
et **en ce qu'**à la réception d'une série de demandes spécifiant celles parmi la pluralité d'actions qui doivent être exécutées par l'appareil, ladite série étant envoyée par la carte, l'appareil est configuré pour interpréter chaque demande de ladite série afin d'identifier une action correspondante parmi la pluralité d'actions et pour exécuter ladite action correspondante.

11. Appareil selon la revendication 10, dans lequel l'appareil est dépourvu d'interface d'entrée utilisateur.

12. Appareil selon la revendication 10, dans lequel une action parmi la pluralité d'actions est soit pour afficher un message sur un écran incorporé dans l'appareil, soit pour allumer un voyant dans l'appareil, soit pour activer une interface de communication sans contact dans l'appareil.

13. Carte (10) répondant au format ID-1, ID-2 ou ID-3 tel que défini par ISO/IEC7810: 2019, configurée pour communiquer, par l'intermédiaire d'une session de communication (61), avec un appareil (20) qui comprend un lecteur de carte (22) apte à établir la session de communication et est configuré pour mettre en œuvre une pluralité d'actions, ladite carte étant configurée pour recevoir une instruction initiale (43) en provenance de l'appareil, l'appareil étant séparé de la carte,
**caractérisée en ce qu'**à la réception de l'instruction initiale, la carte est configurée pour démarrer l'exécution d'un traitement comprenant une pluralité d'étapes, **en ce qu'**une fois que la carte a reçu l'instruction initiale et jusqu'à ce que la session de communication se termine, la carte est configurée pour commander complètement le comportement de l'appareil en envoyant une série de demandes, chacune desdites demandes spécifiant celles parmi la pluralité d'actions qui doivent être exécutées par l'appareil, chaque demande de ladite série étant associée à une action correspondante parmi la pluralité d'actions, et **en ce que** la carte est configurée pour envoyer chaque demande de ladite série après exécution d'une étape du traitement.

14. Carte selon la revendication 13, dans laquelle la carte incorpore une interface d'entrée utilisateur (16) et dans laquelle au moins une demande de ladite série est générée en dépendance d'une valeur capturée par le biais de l'interface d'entrée utilisateur.

15. Système (90) comprenant un appareil selon la revendication 10 et une carte selon la revendication 13.
